# EUROPÄISCHE PATENTSCHRIFT

(11) **EP 2 861 836 B1**
(45) Veröffentlichungstag und Bekanntmachung des Hinweises auf die Patenterteilung: **01.06.2016**
(21) Anmeldenummer: 13726755.5
(22) Anmeldetag: 29.05.2013
(51) Int. Cl.: F01L 1/053, F01L 13/00

(54) **VERFAHREN ZUR MATERIALABTRAGENDEN BEARBEITUNG EINER VERSTELLBAREN NOCKENWELLE SOWIE ANORDNUNG ZUR DURCHFÜHRUNG DES VERFAHRENS**
METHOD FOR MATERIAL-REMOVING WORKING OF AN ADJUSTABLE CAMSHAFT AND ARRANGEMENT FOR CARRYING OUT THE METHOD
PROCÉDÉ PERMETTANT DE FAÇONNER, PAR ENLÈVEMENT DE MATIÈRE, UN ARBRE À CAMES RÉGLABLE AINSI QUE SYSTÈME PERMETTANT DE METTRE EN UVRE LEDIT PROCÉDÉ

(30) Priorität: 15.06.2012 DE 102012105230
(43) Veröffentlichungstag der Anmeldung: 22.04.2015
(73) Patentinhaber: Thyssenkrupp Presta Teccenter Ag, 9492 Eschen (LI)
(72) Erfinder: BINDER, Thomas, 9486 Schwaanwald (LI)
(74) Vertreter: ThyssenKrupp Intellectual Property GmbH
(86) Internationale Anmeldenummer: PCT/EP2013/061102
(87) Internationale Veröffentlichungsnummer: WO 2013/186054

(56) Entgegenhaltungen:
- EP-B1- 1 989 021
- DE-A1-102004 021 376
- DE-A1-102004 058 622
- JP-A- 2010 060 062

## Beschreibung

Die Erfindung betrifft ein Verfahren zur materialabtragenden Bearbeitung einer verstellbaren, einen Wellenkörper aufweisenden Nockenwelle, wobei zumindest ein erstes Bauteil der Nockenwelle axial und/oder in Umfangsrichtung gegenüber dem Wellenkörper beweglich ist, wobei zwischen dem Wellenkörper und dem ersten Bauteil ein die Bewegung ermöglichender Spalt vorgesehen ist, und wobei zum Schutz des ersten beweglichen Bauteils während der materialabtragenden Bearbeitung eine zumindest einen Fluidkanal aufweisende Schutzeinrichtung auf den Wellenkörper gesetzt und mit dem Fluid beaufschlagt wird. Gegenstand der Erfindung ist auch eine Anordnung zur Durchführung eines solchen Verfahrens.

Ein Verfahren mit dem beschriebenen Merkmal ist aus der EP 1 989 021 B1 bekannt. Bei der dort beschriebenen Nockenwelle bildet der Wellenkörper eine hohle Außenwelle, in der eine Innenwelle angeordnet ist, wobei die Innenwelle gegenüber der Außenwelle drehbar ist und wobei das erste Bauteil drehfest mit der Innenwelle verbunden ist. Üblicherweise sind mehrere erste Bauteile in Form von Nocken drehfest mit der Innenwelle verbunden. Darüber hinaus sind zweite Bauteile in Form von Nocken vorgesehen, die dreh- und axialfest und damit ohne einen eine Bewegung ermöglichenden Spalt auf der Außenwelle angeordnet sind. Durch eine Verdrehung der Innenwelle gegenüber der Außenwelle in einem begrenzten, vorgegebenen Bereich können die beiden Gruppen von Nocken gegeneinander verstellt werden, um eine variable Steuerung der Ventile eines Kraftfahrzeugmotors zu ermöglichen. So kann beispielsweise last- und drehzahlabhängig das Verhältnis der Einlastzeit zur Auslastzeit verändert werden, wenn die Einlassventile einerseits und die Auslassventile andererseits mit den unterschiedlichen Gruppen von gegeneinander verstellbaren Nocken betätigt werden.

Die in der EP 1 989 021 B1 beschriebene Nockenwelle ist aus mehreren Teilen zusammengesetzt und wird entsprechend auch als gebaute Nockenwelle bezeichnet. Bei einer solchen gebauten Nockenwelle besteht häufig das Bedürfnis einzelne Bauteile nach dem Zusammensetzen noch zu bearbeiten, beispielsweise um eine Oberfläche auf ein genau vorgegebenes Maß zu schleifen. Darüber hinaus kann es auch zweckmäßig sein den Wellenkörper selbst materialabtragend und insbesondere spanend zu bearbeiten, um beispielsweise eine glatte Oberfläche für ein Gleitlager zu erzeugen. Bei einer solchen Bearbeitung besteht stets die Gefahr, dass Späne oder andere Verunreinigungen in den für die Bewegung notwendigen Spalt zwischen dem Wellenkörper und dem ersten Bauteil gelangen, wodurch die Funktion dieses Bauteils gefährdet wird. Um diese Gefahr zu reduzieren, schlägt die EP 1 989 021 B1 gemäß einer ersten Variante vor, einfache, zweigeteilte Scheiben als Blenden neben dem ersten Bauteil anzuordnen, um so das Bauteil zu schützen. Obwohl diese Maßnahme vergleichsweise einfach ist, ergibt sich der Nachteil, dass Ritzen und Spalten verbleiben können, wodurch kein vollständiger Schutz gewährleistet ist. Darüber hinaus müssen diese Blenden auch eine ausreichende Größe aufweisen, um das erste Bauteil in ausreichendem Maße zu verdecken. Die gesamte Bearbeitung wird dadurch erschwert, wobei das erste Bauteil nicht oder zumindest nicht ohne Weiteres bearbeitet werden kann.

Gemäß einer alternativen Ausgestaltung schlägt die EP 1 989 021 B1 vor, das erste gegenüber dem Wellenkörper bewegliche Bauteil mit einer Kapsel zu umschließen, welche das erste Bauteil vollständig umgibt. Dabei verbleibt lediglich ein geringer Spalt zwischen dieser geschlossenen Kapsel und dem Wellenkörper. Um das Eindringen von Spänen oder anderen Verschmutzungen in die Kapsel zu vermeiden, kann diese mit einem Fluid beaufschlagt werden. Das aus dem Spalt zwischen der Kapsel und dem Wellenkörper austretende Fluid verhindert effektiv den Eintritt von Spänen und anderen Verschmutzungen in die Kapsel. Durch die Kapselung des beweglichen ersten Bauteils ist dieses vollständig verdeckt und kann entsprechend auch nicht mehr selbst bearbeitet werden. Darüber hinaus muss die Kapsel eine erhebliche Größe aufweisen, damit diese in ihrem Innern das erste bewegliche Bauteil aufnehmen kann. Auch dadurch kann die Bearbeitung der übrigen Bauteile der Nockenwelle erschwert werden.

Neben verstellbaren Nockenwellen mit einer Innenwelle und einer Außenwelle sind auch Nockenwellen bekannt, bei denen ein Nockenpaket als erstes, bewegliches Bauteil drehfest aber axial verschiebbar auf dem Wellenkörper angeordnet ist. Eine solche Verschiebbarkeit in axialer Richtung kann beispielsweise durch ein sich in Längsrichtung des Wellenkörpers erstreckendes Vielzahnprofil ermöglicht werden, wobei dann das Nockenpaket als erstes, bewegliches Bauteil eine komplementäre Nabe aufweist. Solche längsverschieblichen Bauteile in Form von Nockenpaketen können auch zu einer Verstellung genutzt werden. So kann beispielsweise entlang der Längsrichtung die Position der Nockenspitze und/oder die Flankensteigung des Nockens verändert werden. Schließlich besteht sogar die Möglichkeit, durch eine entsprechende Form des Wellenkörpers ein Ventil durch eine Längsverschiebung zu deaktivieren, wenn in einem Teillastbetrieb auch der entsprechende Zylinder deaktiviert ist. Entsprechende Ausgestaltungen von gebauten Nockenwellen sind aus der DE 10 2009 057 633 B3, DE 10 2010 022 708 A1 und DE 10 2009 024 455 A1 bekannt.

Der vorliegenden Erfindung liegt die Aufgabe zugrunde, ein Verfahren mit den eingangs beschriebenen Merkmalen anzugeben, welches eine einfache und unkomplizierte Bearbeitung der Bauteile einer Nockenwelle ermöglicht, wobei der zwischen dem ersten Bauteil und dem Wellenkörper vorhandene und die Bewegung des ersten Bauteils ermöglichende Spalt zuverlässig geschützt ist.

Gegenstand der Erfindung und Lösung der Aufgabe ist ein Verfahren gemäß Patentanspruch 1. Das Verfahren ist ausgehend von den eingangs genannten Merkmalen dadurch gekennzeichnet, dass die Schutzeinrichtung seitlich zu dem ersten, beweglichen Bauteil anordnet wird, wobei die Anordnung derart erfolgt, dass zumindest ein Teil des Fluids seitlich auf das erste Bauteil und in einen Zwischenraum zwischen der Schutzeinrichtung und dem ersten Bauteil geleitet wird, und wobei das erste Bauteil zumindest über einen Teil seiner Länge in radialer Richtung freiliegt.

Da das erste Bauteil in radialer Richtung zumindest über einen Teil einer Länge freiliegt, kann auch dieses je nach Bedarf bearbeitet werden. Der vorliegenden Erfindung liegt die Erkenntnis zugrunde, dass durch die beschriebene Beaufschlagung durch ein Fluid ein effektiver Schutz möglich ist, ohne dass das erste Bauteil vollständig verdeckt oder abgeschottet wird. Durch die gezielte Beaufschlagung mit dem Fluid wird erreicht, dass genau der für die Bewegung erforderliche Spalt zwischen dem ersten Bauteil und dem Wellenkörper geschützt wird. Im Rahmen der Erfindung kann das erste Bauteil in axialer Richtung des Wellenkörpers gesehen über seine gesamte Länge in radialer Richtung freiliegen. Darüber hinaus ist es aber auch möglich, dass die Schutzeinrichtung zwar seitlich zu dem ersten, beweglichen Bauteil angeordnet wird, aber einen Rand des Bauteils noch in axialer Richtung überragt. Der Schutz des Randes des ersten Bauteils kann damit noch verbessert werden, wobei jedoch andererseits die Geometrie der Schutzeinrichtung auch an die Kontur des ersten Bauteils an seinem zugeordneten Rand angepasst werden muss. In dem in radialer Richtung noch freiliegenden Bereich ist aber dann weiterhin eine Bearbeitung möglich.

Neben dem Vorteil, dass das erste Bauteil bearbeitet werden kann, kann die erfindungsgemäße Schutzeinrichtung auch viel kompakter als die aus dem Stand der Technik bekannte Ausführung sein. Es muss lediglich gewährleistet sein, dass das Fluid seitlich auf das erste Bauteil geleitet wird, wodurch dieser mit Fluid beaufschlagte Bereich frei von Verschmutzungen gehalten wird. Durch einen kompakten Aufbau ist letztlich auch die Bearbeitung der übrigen Bauteile einfacher möglich, weil diese leichter zugänglich sind.

Bei dem zumindest einen ersten, beweglichen Bauteil handelt es sich vorzugsweise um einen Nocken, ein Nockenpaket oder dergleichen. Darüber hinaus kann die Nockenwelle aber auch weitere Bauteile aufweisen, die axialfest und drehfest an den Wellenkörper angeschlossen sind.

Darüber hinaus ist es auch möglich, aus Abschnitten des Wellenkörpers selbst weitere Funktionselemente des Wellenkörpers zu bilden. So kann beispielsweise durch eine Oberflächenbearbeitung an dem Wellenkörper selbst ein Lagersitz erzeugt werden. Auch können durch ein Umformverfahren sogar Nocken oder andere Funktionselemente aus dem Material des Wellenkörpers erzeugt werden. Die Ausgestaltung solcher weiteren, gegenüber dem Wellenkörper nicht beweglichen Funktionselementen ist im Rahmen der Erfindung nicht eingeschränkt.

Die materialabtragende Bearbeitung erfolgt üblicherweise spanabhebend, wobei diese Bearbeitung mit geometrisch bestimmter und mit geometrisch unbestimmter Schneide erfolgen kann. Materialabtragende Verfahren mit geometrisch bestimmter Schneide sind beispielsweise Drehen oder Fräsen. Zu den Verfahren mit geometrisch unbestimmter Schneide zählen das Schleifen und Honen.

Im Rahmen der Erfindung ist es nicht ausgeschlossen, dass das zumindest eine erste Bauteile oder auch andere Bauteile oder Abschnitte der Welle zusätzlich auch vor dem Zusammenbau der Nockenwelle bearbeitet werden. Durch die nachträgliche Bearbeitung der Nockenwelle können aber Form- und Lageabweichungen wirksam reduziert werden. Dabei ist zu berücksichtigen, dass sich aufgrund der Beweglichkeit der einzelnen Teile sowie durch Maßabweichungen an den einzelnen Teilen die Toleranzen zu einem erheblichen Wert aufaddieren können. Insbesondere ist bei dem Einsatz der Nockenwelle auch die exakte Ausrichtung der einzelnen Funktionselemente gegeneinander ausschlaggebend. So muss beispielsweise das Profil eines Nockens nicht nur gegenüber der Welle sondern auch gegenüber der Anordnung eines an der Welle gebildeten Lagers korrekt ausgerichtet sein.

Die Schutzeinrichtung wird zweckmäßigerweise bis dicht an eine Stirnfläche des ersten Bauteils herangeführt, damit durch die Beaufschlagung mit dem Fluid ein ausreichender Fluidstrom sowie ein ausreichender Überdruck erreicht werden können, um Späne oder andere Verschmutzungen sicher abzuführen. Die Stirnfläche des ersten Bauteils kann sich dabei ausgehend von dem zwischen dem ersten Bauteil und dem Wellenkörper gebildeten Spalt radial nach außen erstrecken. Wenn die Stirnfläche des ersten Bauteils sowie eine zugeordnete Stirnfläche der Schutzeinrichtung genau parallel ausgerichtet sind, ergibt sich zwischen dem ersten Bauteil und der Schutzeinrichtung um den gesamten Umfang des Wellenkörpers ein in radialer Richtung verlaufender Spalt gleichbleibender Breite, durch den das Fluid nach außen geführt wird und so Verschmutzungen mitreißt. Grundsätzlich ist es auch möglich, dass die Schutzeinrichtung zwar seitlich des ersten Bauteils angeordnet ist, aber noch einen Rand des ersten Bauteils überdeckt. Im Gegensatz zu der zuvor beschriebenen Ausgestaltung wird dann zwischen den Rand des ersten Bauteils und der Schutzeinrichtung ein im Wesentlichen horizontaler Spalt gebildet, wobei auch der überdeckte Rand des ersten Bauteils geschützt ist. Ausschlaggebend ist aber, dass weiterhin gerade auch die Stirnfläche des ersten Bauteils und der zwischen den ersten Bauteil und dem Wellenkörper gebildete Spalt mit dem Fluid beaufschlagt und so geschützt ist. Bei einer teilweisen Überdeckung des Randbereichs wird dort ein verbesserter Schutz erreicht, wenn der Randbereich selbst nicht mehr bearbeitet werden muss. Andererseits kann die Schutzeinrichtung nicht mehr so kompakt wie zuvor ausgeführt werden, wobei auch eine genaue Anpassung der Kontur der Schutzeinrichtung an die Kontur des ersten Bauteils an den zugeordneten Rand notwendig ist.

Eine parallele Ausrichtung der einander zugewandten Stirnflächen des ersten Bauteils sowie der Schutzeinrichtung ist im Rahmen der Erfindung aber nicht zwingend notwendig. Auch bei einem schrägen oder um den Umfang ungleichmäßigen Verlauf kann durch das Fluid bei einer geeigneten Durchflussmenge ein sicherer Schutz erreicht werden.

Insbesondere kann die Schutzeinrichtung an ihrer dem ersten Bauteil zugewandten Fläche zumindest einen Vorsprung aufweisen, wobei das erste Bauteil während der materialabtragenden Bearbeitung an dem Vorsprung abgestützt wird. Dieser Vorsprung dient dann als eine Art Abstandshalter, wodurch der Zwischenraum zwischen der Schutzeinrichtung und dem ersten Bauteil genau vorgegeben wird. Da der Vorsprung von Fluid umströmt wird, kann trotz der stellenweise direkten Anlage des ersten Bauteils an der Schutzeinrichtung ein effektiver Schutz gegenüber dem Eintritt von Verunreinigungen erreicht werden.

Bevorzugt ist der Vorsprung so ausgebildet, dass lediglich eine punktförmige Anlage vorliegt, um hinsichtlich der Fluidströmung Abschattungen zu vermeiden und eine gleichmäßige Umströmung durch das Fluid zu gewährleisten. Alternativ kann auch das erste Bauteil mit einem entsprechenden Vorsprung als Abstandshalter ausgerüstet sein. Um bei der Anlage ein Verkippen zu vermeiden, können um den Umfang auch mehrere Vorsprünge an dem ersten Bauteil und/oder der Schutzeinrichtung vorgesehen sein.

Durch den Fluidstrom, der zwischen dem ersten Bauteil und der Schutzeinrichtung nach außen strömt, kann der die Bewegung ermöglichende Spalt zwischen dem ersten Bauteil und dem Wellenkörper frei von Verschmutzungen gehalten werden. Dabei ist zu berücksichtigen, dass dieser Spalt in Längsrichtung der Nockenwelle an beiden Seiten des ersten Bauteils mündet. Entsprechend kann im Rahmen der Erfindung vorgesehen sein, dass an diesen beiden Seiten des ersten Bauteils, also in axialer Richtung gesehen vor und hinter dem ersten Bauteil, jeweils eine Schutzeinrichtung angeordnet wird.

Gemäß einer alternativen Ausgestaltung des erfindungsgemäßen Verfahrens kann es aber auch ausreichend sein, das gesamte erste Bauteil mit lediglich einer Schutzeinrichtung gegen den Eintritt von Verschmutzungen zu schützen. Dabei kann ein Teilstrom des Fluids von der Schutzeinrichtung derart in den Spalt zwischen dem ersten Bauteil und dem Wellenkörper geleitet werden, dass dieser Teilstrom den Spalt durchströmt und den Spalt an der der Schutzeinrichtung gegenüberliegenden Stirnfläche des ersten Bauteils verlässt. An dieser Seite des Bauteils erfolgt dann also der Schutz des die Bewegung ermöglichenden Spaltes dadurch, dass der Teilstrom des Fluids aus diesem Spalt herausgeblasen wird und so den Eintritt von Verschmutzungen in Form von Spänen oder dergleichen verhindert.

Eine solche Verfahrensweise ist gerade dann möglich, wenn zwischen dem ersten Bauteil und dem Wellenkörper ein ausreichend großer Spalt verbleibt. Denkbar ist es auch zu dem Zweck der Belüftung ausgehend von einer komplementären Form von Wellenkörper und erstem Bauteil in Längsrichtung verlaufende Belüftungskanäle vorzusehen, um eine effektive Durchströmung zu ermöglichen.

Gegenstand der Erfindung ist auch eine Anordnung zur Durchführung des beschriebenen Verfahrens mit einer Vorrichtung zur materialabtragenden Bearbeitung und mit einer verstellbaren Nockenwelle. Die verstellbare Nockenwelle weist einen Wellenkörper und zumindest ein erstes Bauteil auf, welches axial und/oder in Umfangsrichtung gegenüber dem Wellenkörper beweglich ist. Im Rahmen der Erfindung kann die Nockenwelle bereits vollständig montiert sein. Alternativ ist es aber auch möglich, dass nachträglich noch einzelne Teile ergänzt werden, um die Nockenwelle zu vervollständigen. Die Vorrichtung umfasst zumindest eine Schutzeinrichtung, die zumindest einen Fluidkanal aufweist. Erfindungsgemäß ist die Schutzreinrichtung seitlich zu dem ersten beweglichen Bauteil derart angeordnet, dass das erste Bauteil in radialer Richtung freiliegt.

Wie bereits im Zusammenhang mit dem erfindungsgemäßen Verfahren beschrieben, kann ein Außenprofil des Wellenkörpers mit einem Innenprofil des darauf angeordneten ersten Bauteils eine Längsführung entlang der Längsachse des Wellenkörpers bilden. Besonders bevorzugt ist dabei ein komplementäres Vielzahnprofil, bei dem das in Umfangsrichtung wirkende Drehmoment über mehrere Zähne übertragen wird. Je nach Belastung kann aber auch eine einfache Führungsnut mit einem zugeordneten Vorsprung ausreichend sein.

Gemäß einer alternativen Ausgestaltung der Anordnung bildet der Wellenkörper eine hohle Außenwelle der Nockenwelle, in der eine Innenwelle angeordnet ist, wobei die Innenwelle gegenüber der Außenwelle drehbar ist und wobei das erste Bauteil drehfest mit der Innenwelle verbunden ist. Der Winkelbereich für die Verdrehung ist dabei üblicherweise durch Endanschläge vorgegeben und begrenzt. Schließlich können auch schräge bzw. spiralförmige Führungen an dem Wellenkörper vorgesehen sein, um eine kombinierte Axial- und Radialbewegung zu verwirklichen. Unabhängig von der Art der Bewegung muss zwischen dem Wellenkörper und dem darauf angeordneten zumindest einem ersten Bauteil ein die Bewegung ermöglichender Spalt verbleiben.

Um den Wellenkörper mit dem daran angeordneten Bauteilen in die Vorrichtung einsetzen zu können, ist die Schutzeinrichtung vorzugsweise aus zwei gegeneinander beweglichen Elementen gebildet, welche insbesondere die Form von Halbschalen haben können und die zangenartig auf den Wellenkörper aufgesetzt werden können.

Die Schutzeinrichtung ist mit einem Fluid beaufschlagt, das heißt von einem Fluid durchströmt, welches die Schutzeinrichtung zumindest an der Seite verlässt, die in Richtung des zu schützenden ersten Bauteils gerichtet ist.

Davon ausgehend ergeben sich verschiedene Ausgestaltungen für die Schutzeinrichtung. So kann zwischen dem Wellenkörper und der Schutzeinrichtung ein Ringkanal gebildet sein, welcher sowohl an der dem ersten Bauteil zugewandten als auch an der dem ersten Bauteil gegenüberliegenden Seite der Schutzeinrichtung mündet und der an eine Fluidzuleitung angeschlossen ist. Das zugeleitete Fluid wird dann innerhalb der Schutzeinrichtung in zwei ringförmige Teilströme aufgeteilt, wobei ein Teilstrom auf das zu schützende erste Bauteil geleitet wird und wobei der zweite Teilstrom die Schutzeinrichtung an der gegenüberliegenden Seite verlässt. Bei einer solchen Ausgestaltung kann die Schutzeinrichtung universell eingesetzt und insbesondere in axialer Richtung gesehen vor oder hinter einem zu schützenden Bauteil angeordnet werden. Darüber hinaus kann auch an beiden Seiten der Schutzeinrichtung die Ablagerung von Verschmutzungen in Form von Spänen oder dergleichen vermieden werden. In Kauf zu nehmen ist jedoch, dass lediglich ein Teil des Fluidstromes für den Schutz des ersten Bauteils zur Verfügung steht.

Gemäß einer alternativen Ausgestaltung ist zwischen dem Wellenkörper und der Schutzeinrichtung ein Ringkanal gebildet, welcher lediglich an der dem ersten Bauteil zugewandten Seite der Schutzeinrichtung mündet und der an eine Fluidzuleitung angeschlossen ist. Im Rahmen einer solchen Ausgestaltung wird der gesamte Fluidstrom bzw. der größte Teil des Fluidstroms auf das zu schützende erste Bauteil geleitet. Dabei ist zu berücksichtigen, dass auch an der dem ersten Bauteil gegenüberliegenden Seite der Schutzeinrichtung zumindest ein schmaler Spalt zwischen der Schutzeinrichtung und dem Wellenkörper verbleibt. Sofern die entsprechenden Leckageströme gering sind, kann diese Einschränkung in Kauf genommen werden.

Bei den beiden beschriebenen Varianten wird das Fluid unmittelbar an der Außenfläche des Wellenkörpers auf das zu schützende erste Bauteil bzw. den zwischen dem ersten Bauteil und dem Wellenkörper verlaufenden Spalt geleitet.

Um einen in radialer Richtung weiter außen liegenden Fluidaustritt aus der Schutzeinrichtung zu realisieren, ist gemäß einer weiteren Alternative vorgesehen, dass innerhalb der Schutzeinrichtung ein Ringkanal gebildet ist, welcher an der dem ersten Bauteil zugewandten Seite der Schutzeinrichtung mündet und der an die bereits zuvor beschriebene Fluidzuleitung angeschlossen ist.

Die Fluidzuleitung erstreckt sich üblicherweise in etwa in radialer Richtung von dem Wellenkörper weg. Wenn die Schutzeinrichtung aus zwei gegeneinander beweglichen Elementen in Form von Halbschalen gebildet ist, kann die Fluidzuleitung beispielsweise in einem von zwei Tragarmen verlaufen, an denen die gegeneinander beweglichen Elemente der Schutzeinrichtung gehalten sind.

Die Erfindung wird im Folgenden anhand lediglich eines Ausführungsbeispiels darstellenden Zeichnungen erläutert. Es zeigen:
- **Fig.1**: einen Ausschnitt aus einer Nockenwelle mit einem in axialer Richtung verschiebbaren Nockenpaket und mit einer benachbart zu dem Nockenpaket angeordneten Schutzeinrichtung,
- **Fig. 2 bis Fig. 4**: Ausschnitte der Anordnung gemäß der Fig. 1 mit alternativen Ausgestaltungen der Schutzeinrichtung,
- **Fig. 5**: eine Anordnung gemäß der Fig. 1 mit zwei Schutzeinrichtungen, die an gegenüberliegenden Stirnseiten des Nockenpaketes angeordnet sind,
- **Fig. 6**: eine Anordnung gemäß der Fig. 1, wobei die Nockenwelle in einem Lagerrahmen angeordnet ist,
- **Fig. 7**: eine alternative Ausgestaltung der Nockenwelle mit einem Wellenkörper in Form einer Außenwelle und einem darauf drehbar angeordneten Nockenpaket,
- **Fig. 8**: eine Vorrichtung zur Aufnahme der Nockenwelle während einer materialabtragenden Bearbeitung,
- **Fig. 9a und 9b**: eine Detailansicht einer Schutzeinrichtung der in Fig. 8 dargestellten Vorrichtung im offenen sowie im geschlossenen Zustand,
- **Fig. 10a, 10b**: eine alternative Ausgestaltung der Schutzeinrichtung im offenen sowie im geschlossenen Zustand,
- **Fig. 11**: eine Variante der in Fig. 5 dargestellten Anordnung,
- **Fig. 12**: eine Variante der in Fig. 7 dargestellten Anordnung mit nur einer Schutzeinrichtung.

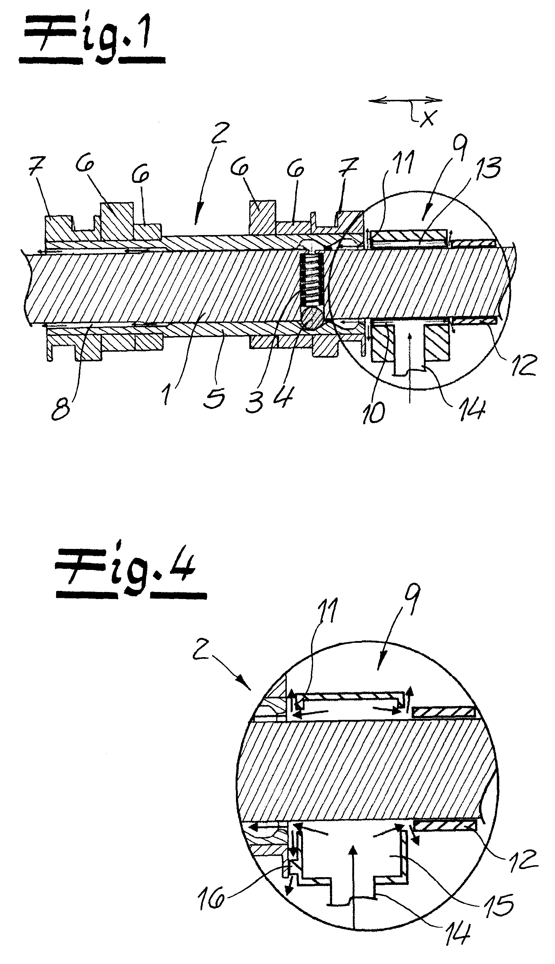

Die Fig. 1 zeigt einen Ausschnitt einer Nockenwelle, die einen Wellenkörper 1 und zumindest ein erstes auf dem Wellenkörper 1 beweglich angeordnetes Bauteil 2 in Form eines Nockenpaketes aufweist. Im Rahmen der Ausgestaltung der Fig. 1 ist das erste Bauteil 2 axial entlang einer Längsrichtung x des Wellenkörpers 1 verstellbar, wozu der Wellenkörper 1 an seinem Außenumfang sowie das erste Bauteil 2 an seinem Innenumfang Verzahnungsprofile aufweisen, die nicht im Detail dargestellt sind. Um das erste, in Längsrichtung x bewegliche Bauteil 2 in zwei unterschiedlichen Funktionsstellungen halten zu können, weist der Wellenkörper 1 eine Querbohrung auf, in der eine von einer Feder 3 beaufschlagte Kugel 4 angeordnet ist.

Das erste Bauteil 2 weist einen auf den Wellenkörper 1 angeordneten, im Wesentlichen rohrförmigen Träger 5 sowie darauf befestigte Nockenelemente 6 auf. Eine Verstellung des ersten Bauteils 2 kann über endseitige Verstellelemente 7 erfolgen.

Damit das erste Bauteil 2 in Längsrichtung x gegenüber dem Wellenkörper 1 beweglich ist, muss zwischen dem ersten Bauteil 2 und dem Wellenkörper 1 ein die Bewegung ermöglichender Spalt 8 verbleiben. Damit ergibt sich das Problem, dass dieser Spalt 8 bei einer Bearbeitung der Nockenwelle nicht verschmutzt werden darf, weil ansonsten eine ordnungsgemäße Funktion des ersten Bauteils 2 gefährdet ist.

Zum Schutz des ersten beweglichen Bauteils 2 während einer materialabtragenden Bearbeitung, insbesondere einer spanabhebenden Bearbeitung, ist eine Schutzeinrichtung 9 auf den Wellenkörper 1 aufgesetzt und derart seitlich des ersten Bauteils 2 angeordnet, dass zumindest ein Teil eines durch Pfeile angedeuteten Fluidstroms durch einen Fluidkanal 10 seitlich auf das erste Bauteil 2 und in einen Zwischenraum 11 zwischen der Schutzeinrichtung 9 und dem ersten Bauteil 2 geleitet wird.

Die Schutzeinrichtung 9 ist an einem Längsabschnitt des Wellenkörpers 1 angeordnet, der frei von weiteren Funktionselementen ist. Durch die beschriebene Anordnung der Schutzeinrichtung 9 ist eine materialabtragende Bearbeitung des gesamten ersten Bauteils 2 möglich, weil dieses in radialer Richtung freiliegt. Darüber hinaus können aber auch weitere Bauteile, beispielsweise eine in der Fig. 1 dargestellte Lagerbuchse 12 bearbeitet werden. Durch den Fluidstrom kann vermieden werden, dass Späne oder andere bei der materialabtragenden Bearbeitung auftretende Verunreinigungen in den Zwischenraum 11 und den Spalt 8 eintreten können.

Der Fig. 1 ist des Weiteren zu entnehmen, dass bei der dort dargestellten Anordnung ein Teilstrom des Fluids von der Schutzeinrichtung 9 derart in den Spalt 8 zwischen dem ersten Bauteil 2 und dem Wellenkörper 1 geleitet wird, dass dieser Teilstrom den gesamten Spalt 8 durchströmt und den Spalt 8 an einer der Schutzeinrichtung 9 gegenüberliegenden Seitenfläche das erste Bauteil 2 verlässt. Auf diese Weise kann auch an dieser der Schutzeinrichtung 9 abgewandten Seite des ersten Bauteils der Eintritt von Verschmutzungen in den Spalt 8 vermieden werden.

Gemäß der Fig. 1 ist zwischen dem Wellenkörper 1 und der Schutzeinrichtung 9 ein Ringkanal 13 gebildet, welcher sowohl an der dem ersten Bauteil 2 zugewandten als auch an der dem ersten Bauteil 2 gegenüberliegenden Seite der Schutzeinrichtung 9 mündet und der an eine Fluidzuleitung 14 anschließt bzw. angeschlossen ist. Bei einer solchen Ausgestaltung der Schutzeinrichtung 9 wird an beiden Seiten eine Ablagerung bzw. ein Eintritt von Verschmutzungen verhindert. Eine solche Schutzeinrichtung 9 kann bezogen auf die Darstellung gemäß der Fig. 1 links oder rechts, d. h. in axialer Richtung gesehen vor oder hinter dem ersten Bauteil 2 angeordnet werden.

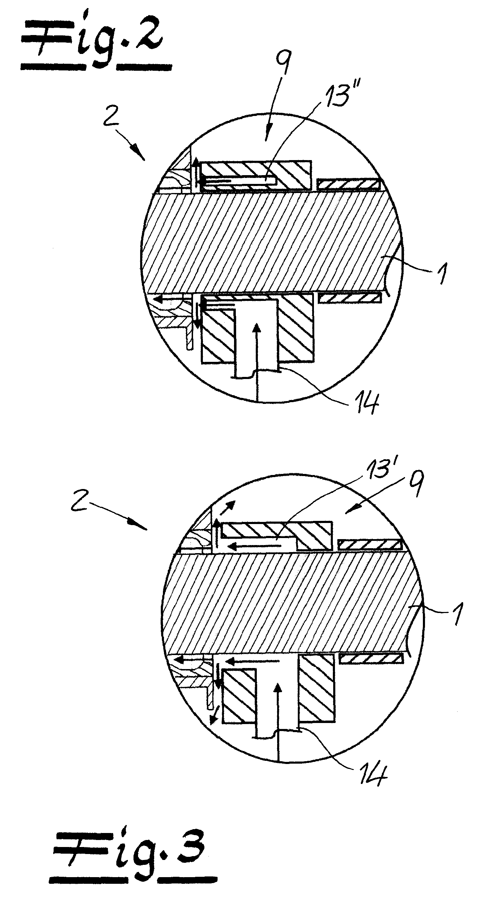

Die Fig. 2 und 3 zeigen einen Ausschnitt der Fig. 1 mit einer abgewandelten Ausgestaltung der Schutzeinrichtung 9. Gemäß der Fig. 3 ist zwischen dem Wellenkörper 1 und der Schutzeinrichtung 9 ein Ringkanal 13' gebildet, welcher lediglich an der dem ersten Bauteil 2 zugewandten Seite der Schutzeinrichtung 9 mündet und der an eine Fluidzuleitung 14 angeschlossen ist. Durch die Ausgestaltung gemäß der Fig. 3 wird erreicht, dass der gesamte Fluidstrom auf das erste Bauteil 2 geleitet wird. An der gegenüberliegenden Seite verbleibt lediglich ein sehr schmaler Spalt zwischen dem Wellenkörper 1 und der Schutzeinrichtung 9, der nur einen geringen Fluiddurchtritt ermöglicht. Durch die verbesserte Ausnutzung des Fluidstroms kann der Schutz gerade bei einem geringen Fluiddurchsatz verbessert werden.

Die Fig. 2 zeigt eine weitere Abwandlung, bei der ein Ringkanal 13" vollständig innerhalb der Schutzeinrichtung 9 gebildet ist. Ausgehend von dem Ringkanal 13" verbleibt also in Richtung des Wellenkörpers 1 ein Steg. Durch den nach außen gelegten Ringkanal 13" kann die Position des Fluidaustritts verändert und an die jeweiligen Erfordernisse angepasst werden.

Schließlich zeigt die Fig. 4 eine weitere Variante der Schutzeinrichtung 9, bei der die Schutzeinrichtung 9 einen hohlen Innenraum 15 aufweist. Des Weiteren weist die Schutzeinrichtung auch einen Vorsprung 16 als Abstandshalter auf, mit dem die Größe des Zwischenraums 11 vorgesehen wird. Ein solcher Vorsprung 16 kann auch bei den zuvor beschriebenen Varianten der Schutzeinrichtung 9 vorgesehen sein. Ansonsten ergibt sich hinsichtlich der Funktion eine Übereinstimmung mit der Ausgestaltung gemäß der Fig. 1.

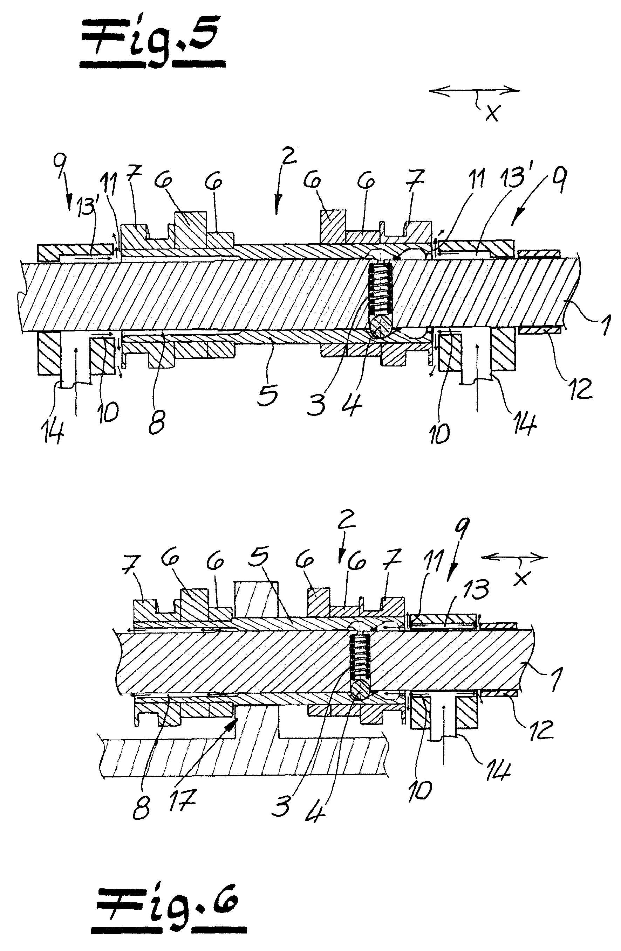

Gemäß der Fig. 1 wird die von der Schutzeinrichtung 9 abgewandte Seite des Spaltes 8 in einem gewissen Maße durch einen Teilstrom des Fluids geschützt, welcher dort aus dem Spalt 8 austritt. Je nach Größe und Länge des Spaltes 8 ist diese Maßnahme aber nicht in allen Fällen ausreichend, um den Eintritt von Späne oder ähnlichen Verschmutzungen in den Spalt 8 zu vermeiden. Gemäß der Fig. 5 können deshalb an beiden Seiten des ersten Bauteils 2 Schutzeinrichtungen 9 vorgesehen sein.

Wie in der Fig. 6 angedeutet, kann eine Bearbeitung der Nockenwelle auch dann noch erfolgen, wenn diese bereits in einem Lagerrahmen 17 angeordnet ist.

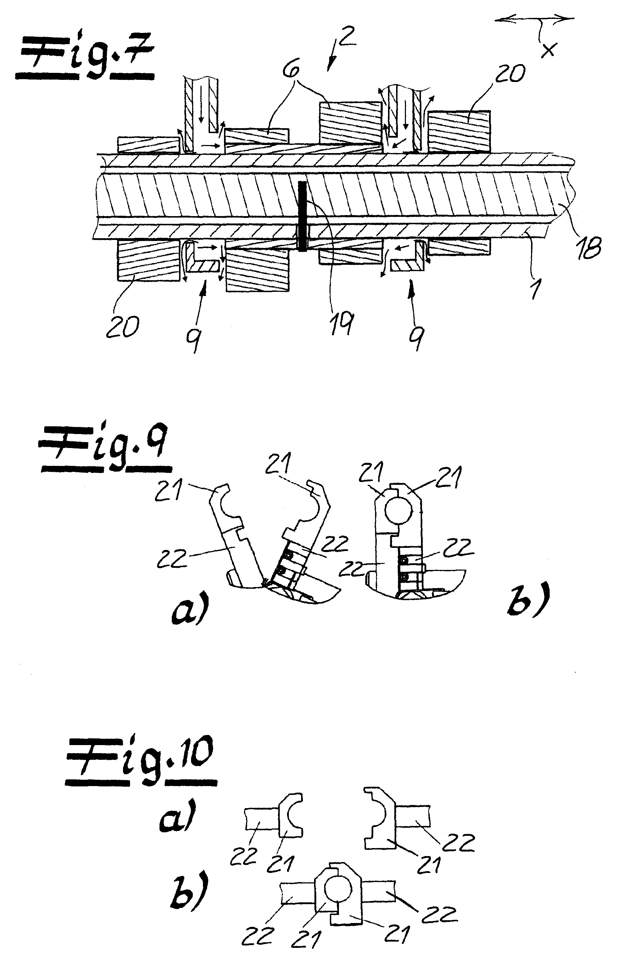

Die Fig. 1 bis 6 beziehen sich auf eine Ausgestaltung, bei der das erste Bauteil 2 gegenüber dem Wellenkörper 1 in einer Längsrichtung x beweglich ist. Ein die Bewegung ermöglichender Spalt 8 ist aber auch bei einer Ausgestaltung notwendig, bei der in Umfangsrichtung verstellbare Bauteile vorgesehen sind. So zeigt die Fig. 7 eine Ausgestaltung, bei der der Wellenkörper 1 eine hohle Außenwelle der Nockenwelle bildet, in der eine Innenwelle 18 angeordnet ist, wobei diese Innenwelle 18 in einem begrenzten, vorgegebenen Winkelbereich gegenüber dem Wellenkörper 1 drehbar ist und wobei das erste Bauteil 2 in Form eines Nockenpaketes durch einen Stift 19 drehfest mit der Innenwelle 18 verbunden ist.

In Längsrichtung x gesehen vor und hinter dem ersten Bauteil 2 befinden sich Nocken als zweite Bauteile 20, die axial- und drehfest auf dem Wellenkörper 1 angeordnet sind. Schutzeinrichtungen 9 sind jeweils im Bereich zwischen dem ersten Bauteil 2 und dem jeweils benachbarten zweiten Bauteil 20 angeordnet, wobei die Schutzeinrichtungen 9 wie zuvor beschrieben ausgestaltet sein können und den zwischen dem ersten Bauteil 2 und dem Wellenkörper 1 gebildeten Spalt 8 schützen.

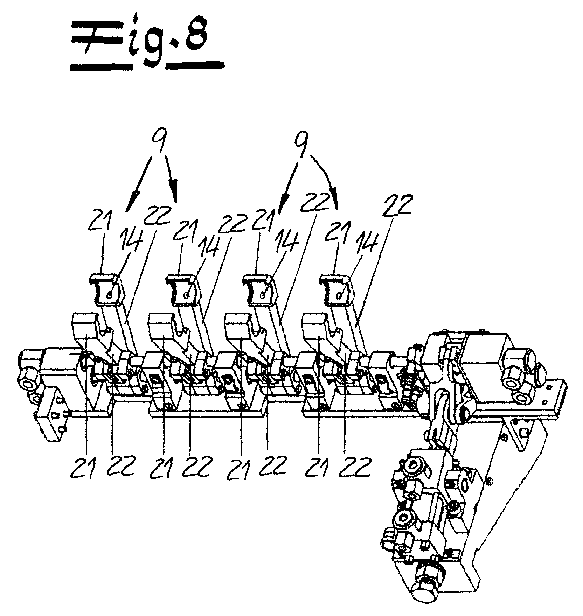

Die Fig. 8 zeigt schematisch eine mögliche Ausgestaltung einer Vorrichtung, an der mehrere Schutzeinrichtungen 9 im geöffneten Zustand angeordnet sind. Die Schutzeinrichtungen 9 sind jeweils aus zwei gegeneinander beweglichen Elementen 21 gebildet, die an Armen 22 angeordnet sind. Durch eine Drehung der Arme 22 um einen gemeinsamen Befestigungspunkt können die Schutzeinrichtungen 9 von einer geöffneten Position (Fig. 9a) in eine geschlossene Position (Fig. 9b) gebracht werden. Die Fluidzuleitung 14 ist dabei zweckmäßigerweise in einem der beiden Arme 20 angeordnet.

Anstelle einer Drehbewegung nach Art einer Schere können die beiden Elemente 21 auch durch eine Längsbewegung geöffnet und geschlossen werden, was in Fig. 10a und Fig. 10b dargestellt ist.

Bei den in Fig. 1 bis Fig. 7 dargestellten Ausgestaltungen verbleibt zwischen dem ersten beweglichen Bauteil 2 und der Schutzeinrichtung 9 ein Abstand in axialer Richtung x, so dass sich der Zwischenraum 11 zwischen dem ersten beweglichen Bauteil 2 und der Schutzeinrichtung 9 radial nach außen erstreckt. Die Schutzeinrichtung 9 kann dabei weitgehend unabhängig von dem beweglichen Bauteil 2 ausgelegt werden und muss lediglich an die Abmessungen des Wellenkörpers 1 angepasst sein, wobei eine sehr kompakte Bauweise möglich ist.

Unter Umständen kann es aber zweckmäßig sein, wenn die Schutzeinrichtung 9 zwar seitlich zu dem ersten beweglichen Bauteil 2 angeordnet ist, aber einen Rand dieses ersten Bauteils 2 überdeckt, um dort einen erhöhten Schutz gegen den Eintritt und die Ablagerung von Verunreinigungen zu gewährleisten.

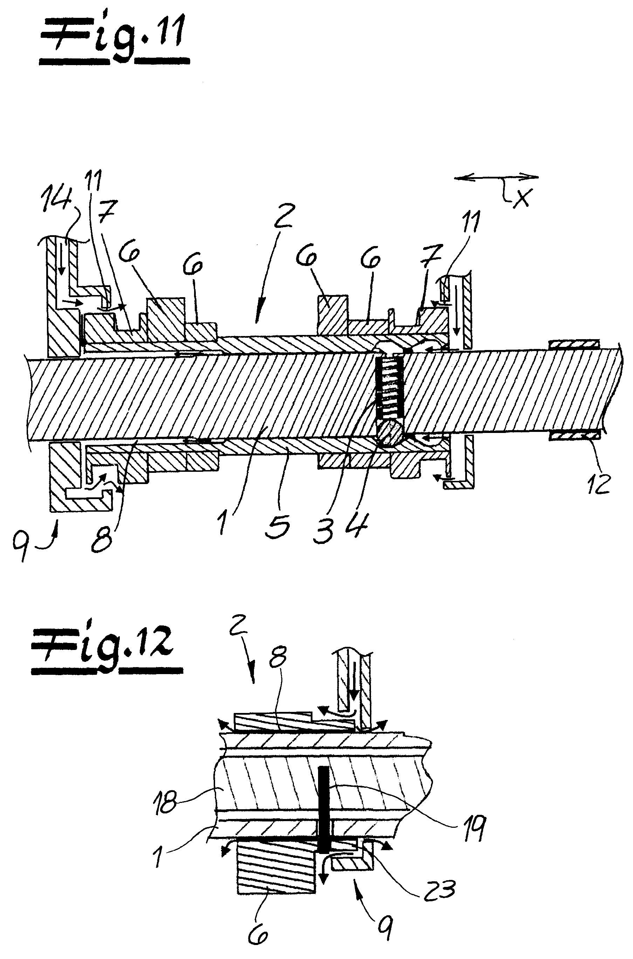

Ausgehend von einer Ausgestaltung gemäß der Fig. 5 zeigt die Fig. 11 eine solche Variante, bei der die endseitigen Verstellelemente 7 des ersten Bauteils 2 noch über eine kurze Länge abgedeckt sind, wodurch ein in horizontaler Richtung verlaufender Zwischenraum 11 gebildet wird. Eine solche Ausgestaltung ist gerade dann zweckmäßig, wenn die endseitigen Verstellelemente 7 nicht mehr nachträglich bearbeitet werden sollen. Die Nockenelemente des ersten Bauteils 2 liegen aber weiterhin frei und können von ihrer Umfangsfläche bearbeitet werden.

Entsprechend zeigt auch die Fig. 12 eine Variante einer Nockenwelle, bei der der Wellenkörper 1 eine hohle Außenwelle bildet, in der eine Innenwelle 18 angeordnet ist. Der dargestellte, mit der Innenwelle 18 verbundene Nocken als erstes Bauteil 2 weist einen seitlichen Bund 23 auf, dem das erste Bauteil 2 durch den Stift 19 drehfest mit der Innenwelle 18 verbunden ist. Die Schutzeinrichtung ist gemäß der Fig. 12 derart ausgebildet, dass auch der seitliche Bund 23 teilweise überdeckt und so geschützt ist. Das von dem ersten Bauteil 2 ebenfalls ausgebildete Nockenelement 6 liegt aber weiterhin frei und kann ohne Weiteres bearbeitet werden. Gemäß der Fig. 12 ist weiterhin gewährleistet, dass auch der zwischen dem ersten Bauteil 2 und dem Wellenkörper 1 notwendige Spalt 8 mit Fluid beaufschlagt ist, so dass bei dem vergleichsweise kurzen ersten Bauteil 2 der Fig. 12 die Anordnung der Schutzeinrichtung 9 an lediglich einer Seite ausreichend ist, wobei der Spalt 8 von einem Teil des Fluids geströmt wird.

## Patentansprüche

1. Verfahren zur materialabtragenden Bearbeitung einer verstellbaren, einen Wellenkörper (1) aufweisenden Nockenwelle, wobei zumindest ein erstes Bauteil (2) der Nockenwelle axial und/oder in Umfangsrichtung gegenüber dem Wellenkörper (1) beweglich ist, wobei zwischen dem Wellenkörper (1) und dem ersten Bauteil (2) ein die Bewegung ermöglichender Spalt (8) vorgesehen ist und wobei zum Schutz des ersten beweglichen Bauteils (2) während der materialabtragenden Bearbeitung eine zumindest einen Fluidkanal (10) aufweisende Schutzeinrichtung (9) auf den Wellenkörper (1) gesetzt und mit einem Fluid beaufschlagt wird, **dadurch gekennzeichnet, dass** die Schutzeinrichtung (9) seitlich zu dem ersten beweglichen Bauteil (2) angeordnet ist, wobei die Anordnung derart erfolgt, das zumindest ein Teil des Fluids seitlich auf das erste Bauteil (2) und in einen Zwischenraum (11) zwischen der Schutzeinrichtung (9) und dem ersten Bauteil (2) geleitet wird, und wobei das erste Bauteil (2) zumindest über einen Teil seiner Länge in radialer Richtung frei liegt.

2. Verfahren nach Anspruch 1, **dadurch gekennzeichnet, dass** das erste Bauteil (2) einer materialabtragenden Bearbeitung unterzogen wird.

3. Verfahren nach Anspruch 1 oder 2, **dadurch gekennzeichnet, dass** auf dem Wellenkörper (1) ein in axialer Richtung (x) auf das erste Bauteil (2) folgendes zweites Bauteil (20) axialfest und drehfest angeordnet ist, wobei die Schutzeinrichtung (9) zwischen dem ersten Bauteil (2) und dem zweiten Bauteil (20) angeordnet wird.

4. Verfahren nach einem der Ansprüche 1 bis 3, **dadurch gekennzeichnet, dass** an beiden Seiten des ersten Bauteils (2) jeweils eine Schutzeinrichtung (9) angeordnet wird.

5. Verfahren nach einem der Ansprüche 1 bis 3, **dadurch gekennzeichnet, dass** ein Teilstrom des Fluids von der Schutzeinrichtung (9) derart in den Spalt (8) zwischen dem ersten Bauteil (2) und den Wellenkörper (1) geleitet wird, dass dieser Teilstrom den Spalt (8) durchströmt und den Spalt (8) an einer der Schutzeinrichtung (9) gegenüberliegenden Seitenfläche des ersten Bauteils (2) verlässt.

6. Verfahren nach einem der Ansprüche 1 bis 5, **dadurch gekennzeichnet, dass** die Schutzeinrichtung (9) an ihrer dem ersten Bauteil (2) zugewandten Fläche zumindest einen Vorsprung (16) aufweist, wobei das erste Bauteil (2) während der materialabtragenden Bearbeitung an dem Vorsprung (16) abgestützt wird und wobei der Vorsprung von dem Fluid umspült wird.

7. Anordnung zur Durchführung eines Verfahrens nach einem der Ansprüche 1 bis 6 mit einer Vorrichtung zur materialabtragenden Bearbeitung und mit einer verstellbaren Nockenwelle, wobei die verstellbare Nockenwelle einen Wellenkörper (1) und zumindest ein erstes Bauteil (2) aufweist, welches axial und/oder in Umfangsrichtung gegenüber dem Wellenkörper (1) beweglich ist, wobei zwischen dem Wellenkörper (1) und dem ersten Bauteil ein die Bewegung ermöglichender Spalt (8) vorgesehen ist und wobei die Vorrichtung eine zumindest einen Fluidkanal (10) aufweisende Schutzeinrichtung (9) aufweist, **dadurch gekennzeichnet, dass** die Schutzeinrichtung (9) seitlich zu dem ersten beweglichen Bauteil (2) derart angeordnet ist, dass das erste Bauteil (2) zumindest über einen Teil seiner Länge in radialer Richtung frei liegt.

8. Anordnung nach Anspruch 7, **dadurch gekennzeichnet, dass** ein Außenprofil des Wellenkörpers (1) mit einem Innenprofil des darauf angeordneten ersten Bauteils (2) eine Längsführung entlang einer Längsachse des Wellenkörpers (1) bildet.

9. Anordnung nach Anspruch 7, **dadurch gekennzeichnet, dass** der Wellenkörper (1) eine hohle Außenwelle der Nockenwelle bildet, in der eine Innenwelle (18) angeordnet ist, wobei die Innenwelle (18) gegenüber der Außenwelle drehbar ist und wobei das erste Bauteil (2) drehfest mit der Innenwelle (18) verbunden ist.

10. Anordnung nach einem der Ansprüche 7 bis 9, **dadurch gekennzeichnet, dass** die Schutzeinrichtung (9) aus zwei gegeneinander beweglichen Elementen (21) gebildet ist.

11. Anordnung nach einem der Ansprüche 7 bis 10, **dadurch gekennzeichnet, dass** zwischen dem Wellenkörper (1) und der Schutzeinrichtung (9) ein Ringkanal (13) gebildet ist, welcher sowohl an der dem ersten Bauteil (2) zugewandten als auch an der dem ersten Bauteil (2) gegenüberliegenden Seite der Schutzreinrichtung (9) mündet und der an eine Fluidzuleitung (14) angeschlossen ist.

12. Anordnung nach einem der Ansprüche 7 bis 10, **dadurch gekennzeichnet, dass** zwischen dem Wellenkörper (1) und der Schutzeinrichtung (9) ein Ringkanal (13') gebildet ist, welcher lediglich an der dem ersten Bauteil (2) zugewandten Seite der Schutzeinrichtung (9) mündet und der an eine Fluidzuleitung (14) angeschlossen ist.

13. Anordnung nach einem der Ansprüche 7 bis 10, **dadurch gekennzeichnet, dass** innerhalb der Schutzeinrichtung (9) ein Ringkanal (13") gebildet ist, welcher an der dem ersten Bauteil (2) zugewandten Seite der Schutzeinrichtung (9) mündet und der an eine Fluidzuleitung (14) angeschlossen ist.

## Claims

1. Method for the material-removing processing of an adjustable camshaft which has a shaft body (1), wherein at least a first component (2) of the camshaft can move axially and/or in the circumferential direction with respect to the shaft body (1), wherein a gap (8) which permits the movement is provided between the shaft body (1) and the first component (2), and wherein in order to protect the first moveable component (2) during the material-removing processing a protection apparatus (9) which has at least one fluid duct (10) is placed on the shaft body (1) and fluid is applied to it, **characterized in that** the protection apparatus (9) is arranged laterally with respect to the first moveable component (2), wherein the arrangement is such that at least some of the fluid is directed laterally onto the first component (2) and into an intermediate space (11) between the protection apparatus (9) and the first component (2), and wherein the first component (2) is exposed in the radial direction over at least part of its length.

2. Method according to Claim 1, **characterized in that** the first component (2) is subjected to material-removing processing.

3. Method according to Claim 1 or 2, **characterized in that** a second component (20) which follows the first component (2) in the axial direction (x) is arranged in an axially fixed and rotationally fixed fashion on the shaft body (1), wherein the protection apparatus (9) is arranged between the first component (2) and the second component (20).

4. Method according to one of Claims 1 to 3, **characterized in that** a protection apparatus (9) is arranged on each of the two sides of the first component (2).

5. Method according to one of Claims 1 to 3, **characterized in that** a partial flow of the fluid from the protection apparatus (9) is directed into the gap (8) between the first component (2) and the shaft body (1) in such a way that this partial flow flows through the gap (8) and exits the gap (8) on a side face of the first component (2) lying opposite the protection apparatus (9).

6. Method according to one of Claims 1 to 5, **characterized in that** the protection apparatus (9) has at least one projection (16) on its face facing the first component (2), wherein the first component (2) is supported on the projection (16) during the material-removing processing, and wherein the fluid washes around the projection.

7. Arrangement for carrying out a method according to one of Claims 1 to 6, having a device for material-removing processing and having an adjustable camshaft, wherein the adjustable camshaft has a shaft body (1) and at least a first component (2) which can move axially and/or in the circumferential direction with respect to the shaft body (1), wherein a gap (8) which permits the movement is provided between the shaft body (1) and the first component, and wherein the device has a protection apparatus (9) having at least one fluid duct (10), **characterized in that** the protection apparatus (9) is arranged laterally with respect to the first moveable component (2) in such a way that the first component (2) is exposed in the radial direction over at least part of its length.

8. Arrangement according to Claim 7, **characterized in that** an external profile of the shaft body (1) forms, with an internal profile of the first component (2) arranged thereon, a longitudinal guide along a longitudinal axis of the shaft body (1).

9. Arrangement according to Claim 7, **characterized in that** the shaft body (1) forms a hollow external shaft of the camshaft, in which external shaft an internal shaft (18) is arranged, wherein the internal shaft (18) can be rotated with respect to the external shaft, and wherein the first component (2) is connected in a rotationally fixed fashion to the internal shaft (18).

10. Arrangement according to one of Claims 7 to 9, **characterized in that** the protection apparatus (9) is formed from two elements (21) which can move with respect to one another.

11. Arrangement according to one of Claims 7 to 10, **characterized in that** an annular duct (13) is formed between the shaft body (1) and the protection apparatus (9), which annular duct (13) opens both on the side of the protection apparatus (9) facing the first component (2) and on the side of the protection apparatus (9) lying opposite the first component (2), and which annular duct (13) is connected to a fluid feed line (14).

12. Arrangement according to one of Claims 7 to 10, **characterized in that** an annular duct (13') is formed between the shaft body (1) and the protection apparatus (9), which annular duct (13') opens merely on the side of the protection apparatus (9) facing the first component (2) and is connected to a fluid feed line (14).

13. Arrangement according to one of Claims 7 to 10, **characterized in that** an annular duct (13") is formed within the protection apparatus (9), which annular duct (13") opens on the side of the protection apparatus (9) facing the first component (2) and is connected to a fluid feed line (14).

## Revendications

1. Procédé d'usinage par enlèvement de matière d'un arbre à cames réglable, présentant un corps d'arbre (1), au moins un premier composant (2) de l'arbre à cames étant déplaçable axialement et/ou dans la direction périphérique par rapport au corps d'arbre (1), entre le corps d'arbre (1) et le premier composant (2) étant prévue une fente (8) permettant le déplacement, et, pour la protection du premier composant déplaçable (2) pendant l'usinage par enlèvement de matière, un dispositif de protection (9) présentant au moins un canal fluidique (10) étant placé sur le corps d'arbre (1) et étant sollicité par un fluide, **caractérisé en ce que** le dispositif de protection (9) est disposé latéralement par rapport au premier composant déplaçable (2), l'agencement s'effectuant de telle sorte qu'au moins une partie du fluide soit guidée latéralement sur le premier composant (2) et dans un espace intermédiaire (11) entre le dispositif de protection (9) et le premier composant (2), et le premier composant (2) étant exposé sur au moins une partie de sa longueur dans la direction radiale.

2. Procédé selon la revendication 1, **caractérisé en ce que** le premier composant (2) est soumis à un usinage par enlèvement de matière.

3. Procédé selon la revendication 1 ou 2, **caractérisé en ce que** sur le corps d'arbre (1) est disposé de manière solidaire axialement et solidaire en rotation un deuxième composant (20) suivant le premier composant (2) dans la direction axiale (x), le dispositif de protection (9) étant disposé entre le premier composant (2) et le deuxième composant (20).

4. Procédé selon l'une quelconque des revendications 1 à 3, **caractérisé en ce qu'**un dispositif de protection (9) est à chaque fois disposé des deux côtés du premier composant (2).

5. Procédé selon l'une quelconque des revendications 1 à 3, **caractérisé en ce qu'**un flux partiel du fluide est guidé depuis le dispositif de protection (9) dans la fente (8) entre le premier composant (2) et le corps d'arbre (1) de telle sorte que ce courant partiel traverse la fente (8) et quitte la fente (8) au niveau d'une surface latérale du premier composant (2) opposée au dispositif de protection (9).

6. Procédé selon l'une quelconque des revendications 1 à 5, **caractérisé en ce que** le dispositif de protection (9) présente, au niveau de sa surface tournée vers le premier composant (2), au moins une saillie (16), le premier composant (2) étant supporté contre la saillie (16) pendant l'usinage par enlèvement de matière et du fluide circulant autour de la saillie.

7. Agencement pour mettre en oeuvre un procédé selon l'une quelconque des revendications 1 à 6, comprenant un dispositif pour l'usinage par enlèvement de matière et un arbre à cames réglable, l'arbre à cames réglable présentant un corps d'arbre (1) et au moins un premier composant (2) qui est déplaçable axialement et/ou dans la direction périphérique par rapport au corps d'arbre (1), une fente (8) permettant le déplacement étant prévue entre le corps d'arbre (1) et le premier composant, et le dispositif présentant un dispositif de protection (9) présentant au moins un canal fluidique (10), **caractérisé en ce que** le dispositif de protection (9) est disposé latéralement par rapport au premier composant déplaçable (2) de telle sorte que le premier composant (2) soit exposé au moins sur une partie de sa longueur dans la direction radiale.

8. Agencement selon la revendication 7, **caractérisé en ce qu'**un profil extérieur du corps d'arbre (1) forme avec un profil intérieur du premier composant (2) disposé sur celui-ci un guide longitudinal le long d'un axe longitudinal du corps d'arbre (1).

9. Agencement selon la revendication 7, **caractérisé en ce que** le corps d'arbre (1) forme un arbre extérieur creux de l'arbre à cames, dans lequel est disposé un arbre intérieur (18), l'arbre intérieur (18) pouvant tourner par rapport à l'arbre extérieur et le premier composant (2) étant connecté de manière solidaire en rotation à l'arbre intérieur (18).

10. Agencement selon l'une quelconque des revendications 7 à 9, **caractérisé en ce que** le dispositif de protection (9) est formé de deux éléments (21) déplaçables l'un par rapport à l'autre.

11. Agencement selon l'une quelconque des revendications 7 à 10, **caractérisé en ce qu'**entre le corps d'arbre (1) et le dispositif de protection (9) est formé un canal annulaire (13) qui débouche à la fois au niveau du côté du dispositif de protection (9) tourné vers le premier composant (2) et également au niveau du côté opposé au premier composant (2) et qui est raccordé à une conduite d'amenée de fluide (14).

12. Agencement selon l'une quelconque des revendications 7 à 10, **caractérisé en ce qu'**entre le corps d'arbre (1) et le dispositif de protection (9) est formé un canal annulaire (13'), qui débouche seulement au niveau du côté du dispositif de protection (9) tourné vers le premier composant (2) et qui est raccordé à une conduite d'amenée de fluide (14).

13. Agencement selon l'une quelconque des revendications 7 à 10, **caractérisé en ce qu'**à l'intérieur du dispositif de protection (9) est formé un canal annulaire (13"), qui débouche du côté du dispositif de protection (9) tourné vers le premier composant (2) et qui est raccordé à une conduite d'amenée de fluide (14).
